# EUROPEAN PATENT APPLICATION

(11) **EP 4 848 451 A1**
(43) Date of publication of application: **02.12.2026**
(21) Application number: 26740827.6
(22) Date of filing: 02.01.2026
(51) Int. Cl.: H01M 50/383, H01M 50/211, H01M 50/507, H01M 10/658, H01M 50/591

(54) **BATTERY MODULE AND METHOD FOR MANUFACTURING BATTERY MODULE**

(30) Priority: 10.01.2025 KR 20250004195
(71) Applicant: LG Energy Solution, Ltd., Seoul 07335 (KR)
(72) Inventor: CHANG, Hyuk Kyun, Daejeon 34122 (KR); KIM, Soo Youl, Daejeon 34122 (KR); PARK, Gi Chan, Daejeon 34122 (KR); CHOI, Beom Seok, Daejeon 34122 (KR)
(74) Representative: Plasseraud IP
(86) International application number: PCT/KR2026/000025
(87) International publication number: WO 2026/151163

(57) **Abstract**

The present disclosure provides a battery module including: a cell stack assembly including a plurality of stacked pouch-type cells; a module housing accommodating the cell stack assembly; and a busbar frame fixing a busbar assembly in which a busbar is assembled with lead parts provided on the cell stack assembly, wherein the battery module further includes a busbar frame cover disposed on the busbar frame and configured to block ejecta from being ejected through an ejection gap present between the busbar assembly and the busbar frame.

## Description

### [Technical Field]

The present disclosure relates to a battery module and a method of manufacturing the battery module. More particularly, the present disclosure relates to a battery module capable of preventing ejecta, such as flames and high-temperature particulates that may serve as ignition sources, from flowing into adjacent battery cells when thermal propagation occurs and a method of manufacturing the battery module.

This application claims the benefit of Korean Patent Application No. 10-2025-0004195, filed on January 10, 2025, the disclosure of which is incorporated herein by reference.

### [Background]

Unlike primary batteries, secondary batteries can be charged and discharged repeatedly. Secondary batteries are widely used as power sources for various cordless devices, including handsets, laptop computers, and cordless vacuum cleaners. Recently, as the per-unit-capacity manufacturing cost of secondary batteries has been dramatically reduced owing to improvements in energy density and economies of scale, and as the driving range of battery electric vehicles (BEV) has reached a level comparable to that of internal combustion engine vehicles, the primary application of secondary batteries has been shifting from mobile devices to mobility.

In the current trend emphasizing secondary batteries for mobility applications, the main directions of secondary battery technology development are cost reduction and enhanced safety. Secondary batteries account for the largest portion of the manufacturing cost of a BEV. Accordingly, the manufacturing cost of the secondary battery is the most important factor in increasing the market share of BEV relative to internal combustion engine vehicles. Cost reduction can be achieved by reducing raw material costs, decreasing the number of process steps, and shortening takt time. The safety of secondary batteries is critically important because it is directly linked to the lives of mobility passengers.

Because secondary batteries are required to be used continuously over long periods, the heat generated during charging and discharging must be effectively controlled. If a secondary battery is not sufficiently cooled, a temperature rise may cause an increase in current, which in turn causes a further temperature rise, leading to a chain reaction. This can result in a state of thermal runaway of the secondary battery.

When secondary batteries are grouped together in the form of a module or a pack, thermal runaway occurring in one secondary battery can cause surrounding secondary batteries to overheat successively, resulting in thermal propagation. Furthermore, the flammable gases released from the overheated secondary battery and the heated electrodes can act as ignition sources, creating a risk of fire. Accordingly, various studies have been conducted to reduce the risk of ignition of secondary batteries.

### [Summary]

### [Technical Problem]

A first technical object of the present disclosure is to provide a battery module capable of preventing ejecta, such as flames and high-temperature particulates that may serve as ignition sources, from flowing into adjacent battery cells when thermal propagation occurs.

A second technical object of the present disclosure is to provide a method of manufacturing a battery module capable of preventing ejecta, such as flames and high-temperature particulates that may serve as ignition sources, from flowing into adjacent battery cells when thermal propagation occurs.

### [Technical Solution]

In order to achieve the first technical object, the present disclosure provides a battery module including: a cell stack assembly including a plurality of stacked pouch-type cells; a module housing accommodating the cell stack assembly; and a busbar frame fixing a busbar assembly in which a busbar is assembled with lead parts provided on the cell stack assembly, wherein the battery module further includes a busbar frame cover disposed on the busbar frame and configured to block ejecta from being ejected through an ejection gap present between the busbar assembly and the busbar frame.

In some embodiments, the busbar frame cover may be provided with a busbar assembly accommodating groove configured to accommodate a busbar assembly exposed part that is exposed on the busbar frame.

In some embodiments, the busbar frame cover may not be penetrated.

In some embodiments, a shape of the busbar assembly accommodating groove may correspond to an outline shape of the busbar assembly exposed part.

In some embodiments, a material of the busbar frame cover may be silicone or a silicone compound having improved adhesion.

In some embodiments, the busbar frame may include a protruding partition part configured to partition the busbar assembly, and the busbar frame cover may include, at a position corresponding to the partition part, a recessed part configured to be fit-coupled to the partition part.

In some embodiments, the busbar frame cover may have a convex shape protruding toward the ejection gap at a position corresponding to the ejection gap.

In some embodiments, the busbar frame may include lead part through-slots through which the lead parts pass through the busbar frame, and the busbar frame cover may have a convex shape protruding toward upper-and-lower ejection gaps, which are regions of the lead part through-slots other than regions where the lead parts pass therethrough, at positions corresponding to the upper-and-lower ejection gaps.

In some embodiments, in the busbar assembly, the busbar is seated in a busbar seating groove provided in the busbar frame, the lead parts passing through the busbar frame are overlapped with each other in pairs, the overlapped lead parts are in contact with a front surface of the seated busbar, and a fixing member may be attached to a front surface of the overlapped lead parts in contact with the front surface of the busbar, thereby bringing the busbar and the overlapped lead parts into contact with each other and fixing them.

In some embodiments, the busbar frame cover may be provided with a busbar assembly accommodating groove having an outline shape corresponding to that of the fixing member.

In some embodiments, a material of the busbar frame cover may be silicone or a silicone compound having improved adhesion.

In order to achieve the second technical object, the present disclosure provides a method of manufacturing a battery module, the method including: a lead part penetration step of passing lead parts of a cell stack assembly including a plurality of pouch-type cells through lead part through-slots provided in a busbar frame; a lead part folding step of, after a busbar is seated in a busbar seating groove provided in the busbar frame, folding the lead parts that have passed through the busbar frame in pairs and overlapping them so as to be brought into contact with a front surface of the seated busbar; a busbar assembly assembling step of attaching a fixing member to a front surface of the overlapped lead parts so as to bring the busbar and the overlapped lead parts into contact with each other and fix them, thereby assembling a busbar assembly; and a busbar frame cover arrangement step of closely contacting and disposing a busbar frame cover on the busbar frame so as to block ejecta from being ejected through an ejection gap present between the busbar assembly and the busbar frame.

### [Advantageous Effects]

The battery module according to embodiments of the present disclosure has the effect of preventing ejecta, such as flames and high-temperature particulates that may serve as ignition sources, from flowing into adjacent battery cells when thermal propagation occurs.

The effects obtainable from the exemplary embodiments of the present disclosure are not limited to the effects mentioned above, and other effects not mentioned will be clearly derived and understood by those of ordinary skill in the art to which the exemplary embodiments of the present disclosure pertain from the following description. That is, unintended effects obtained by carrying out the exemplary embodiments of the present disclosure may also be derived by those of ordinary skill in the art from the exemplary embodiments of the present disclosure.

### [Brief Description of the Drawings]

FIG. 1 is a view illustrating a battery module according to an embodiment of the present disclosure.
FIG. 2 is a view illustrating an exploded view of the battery module according to an embodiment of the present disclosure.
FIG. 3 is a view illustrating an exploded view of a front part of the battery module according to an embodiment of the present disclosure.
FIG. 4 is a view illustrating a top sectional view of a portion of a busbar frame cover accommodating a busbar assembly exposed part in the battery module according to an embodiment of the present disclosure.
FIG. 5 is a view illustrating a state in which the busbar frame cover is separated in the exploded view of the battery module according to an embodiment of the present disclosure.
FIG. 6 is a view illustrating an enlarged view of portion A in FIG. 5.
FIG. 7 is a view illustrating a relationship in which the busbar assembly exposed part is accommodated in the busbar frame cover, among the busbar frame cover, according to an embodiment of the present disclosure.
FIG. 8 is a view illustrating a front view and a side sectional view of the busbar frame cover according to an embodiment of the present disclosure.
FIG. 9 is a view illustrating a state in which a busbar frame cover is separated in an exploded view of a battery module according to another embodiment of the present disclosure.
FIG. 10 is a view illustrating an enlarged view of portion B in FIG. 9.
FIG. 11 is a view illustrating a relationship in which a busbar assembly exposed part is accommodated in the busbar frame cover, among the busbar frame cover, according to another embodiment of the present disclosure.
FIG. 12 is a view illustrating a front view and a side sectional view of the busbar frame cover according to another embodiment of the present disclosure.
FIG. 13 is a view illustrating a method of manufacturing a battery module according to another embodiment of the present disclosure.

### [Best Mode for Carrying Out the Invention]

Hereinafter, preferred embodiments of the inventive concept will be described in detail with reference to the accompanying drawings. However, the embodiments of the inventive concept may be modified in various other forms, and the scope of the inventive concept should not be construed as being limited by the embodiments described below. The embodiments of the inventive concept are provided in order to more fully explain the inventive concept to those of ordinary skill in the art. Like reference numerals denote like elements throughout. Further, various elements and regions in the drawings are schematically depicted. Accordingly, the inventive concept is not limited by the relative sizes or spacings depicted in the accompanying drawings.

Although the terms "first," "second," and the like may be used to describe various components, the components are not limited by these terms. These terms are used only to distinguish one component from another. For example, without departing from the scope of the inventive concept, a first component may be referred to as a second component, and vice versa.

The terminology used in this application is for the purpose of describing particular embodiments only and is not intended to limit the inventive concept. The singular forms are intended to include the plural forms as well, unless the context clearly indicates otherwise. In this application, terms such as "comprises" or "has" are intended to designate the presence of features, numbers, steps, operations, components, parts, or combinations thereof described in the specification, and do not preclude the presence or addition of one or more other features, numbers, operations, components, parts, or combinations thereof.

Unless otherwise defined, all terms used herein, including technical and scientific terms, have the same meanings as those commonly understood by those of ordinary skill in the art to which the inventive concept pertains. In addition, terms defined in commonly used dictionaries should be interpreted as having meanings consistent with their meanings in the context of the relevant art, and shall not be interpreted in an overly formal sense unless expressly so defined herein.

In the case where certain embodiments may be implemented differently, the specific process order may be performed in an order different from that described. For example, two processes described in succession may be performed substantially simultaneously or in the reverse order from that described.

In the accompanying drawings, variations of the depicted shapes may be expected, for example, depending on manufacturing techniques and/or tolerances. Therefore, the embodiments of the present disclosure should not be construed as being limited to the particular shapes of regions illustrated herein, but should include, for example, variations in shape resulting from the manufacturing process. As used herein, the term "and/or" includes each and any combination of one or more of the referenced components. Furthermore, as used herein, the term "substrate" may refer to the substrate itself or a laminated structure including the substrate and certain layers or films formed on a surface thereof. In addition, as used herein, the term "surface of a substrate" may refer to an exposed surface of the substrate itself or an outer surface of a certain layer or film formed on the substrate.

### (First Embodiment)

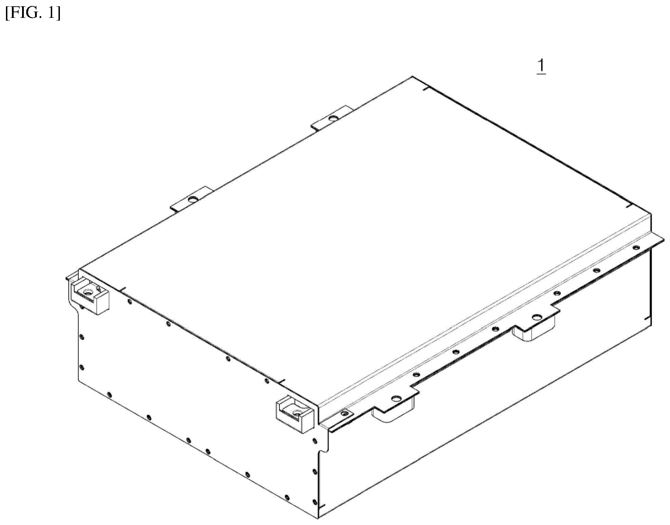

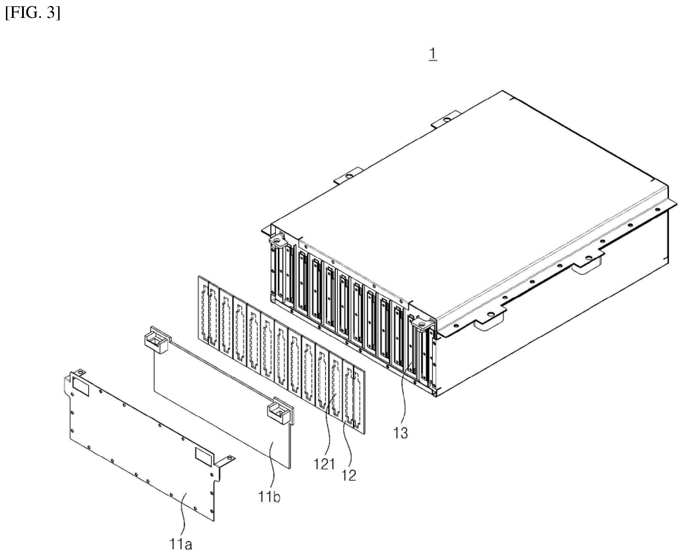

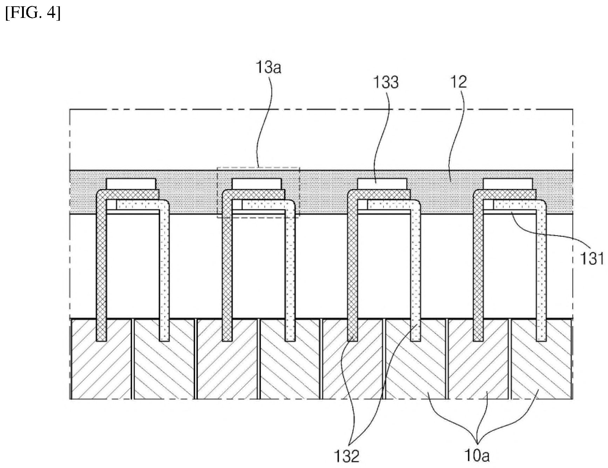

FIG. 1 is a view illustrating a battery module 1 according to an embodiment of the present disclosure, FIG. 3 is a view illustrating an exploded view of the battery module 1 according to an embodiment of the present disclosure, and FIG. 4 is a view illustrating a top sectional view of a portion of a busbar frame cover 12 accommodating a busbar assembly exposed part 13a in the battery module 1 according to an embodiment of the present disclosure.

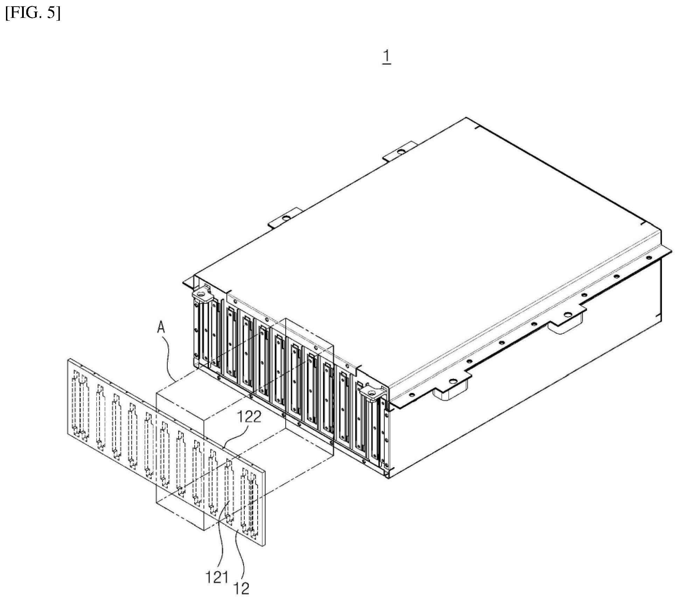

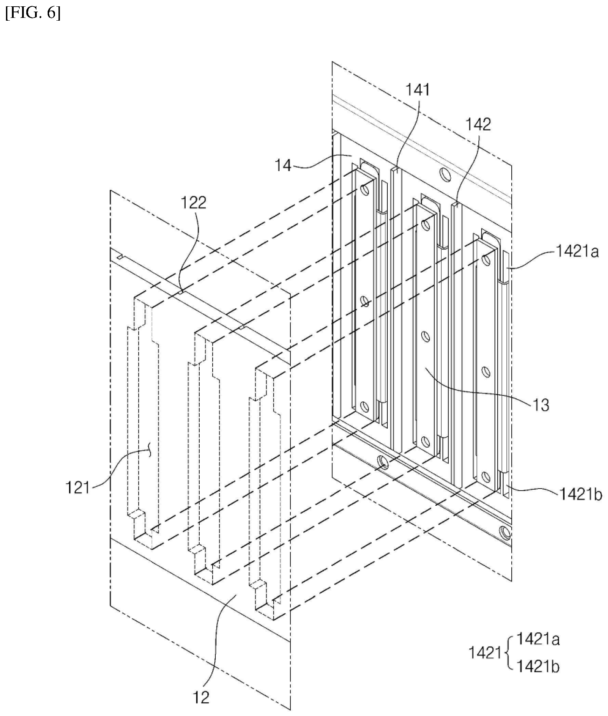

FIG. 5 is a view illustrating a state in which the busbar frame cover 12 is separated in the exploded view of the battery module 1 according to an embodiment of the present disclosure, and FIG. 6 is an enlarged view illustrating the state in which the busbar frame cover 12 is separated in the exploded view of the battery module 1 according to an embodiment of the present disclosure.

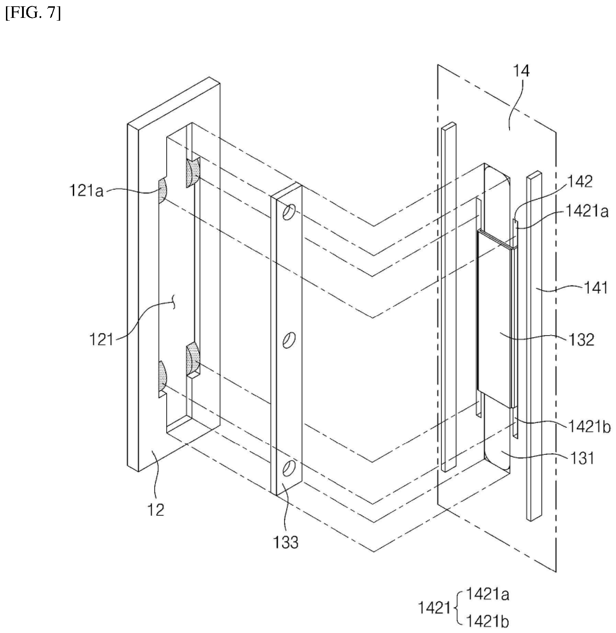

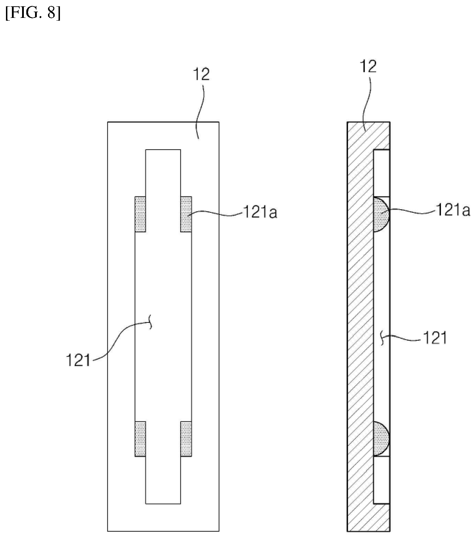

FIG. 7 is a view illustrating a relationship in which the busbar assembly exposed part 13a is accommodated in the busbar frame cover 12, among the busbar frame cover 12, according to an embodiment of the present disclosure, and FIG. 8 is a view illustrating a front view and a side sectional view of the busbar frame cover 12 according to an embodiment of the present disclosure.

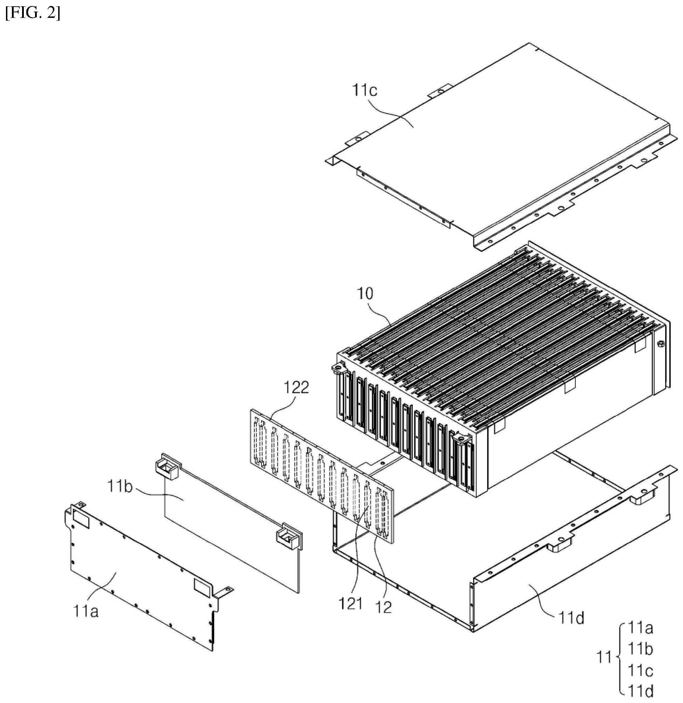

Referring to FIGS. 1 to 8, a battery module 1 according to an embodiment of the present disclosure may include a cell stack assembly 10, a module housing 11, a busbar frame 14, and a busbar frame cover 12.

The cell stack assembly 10 may include a plurality of stacked pouch-type cells 10a.

The module housing 11 may accommodate the cell stack assembly 10.

The module housing 11 may include a front plate 11a, a terminal plate 11b, an upper plate 11c, and a lower case 11d.

The busbar frame 14 may fix a busbar assembly 13 in which a busbar 131 is assembled with lead parts 132 provided on the cell stack assembly 10.

The busbar frame cover 12 may be disposed on the busbar frame 14 to block ejecta from being ejected through an ejection gap 1421 present between the busbar assembly 13 and the busbar frame 14.

The busbar frame cover 12 may be disposed between the terminal plate 11b of the module housing 11 and the busbar assembly 13. The front plate 11a of the module housing 11 may cover the terminal plate 11b.

By the busbar frame cover 12, it is possible to prevent ejecta, such as flames and high-temperature particulates that may serve as ignition sources, from flowing into adjacent battery cells when thermal propagation occurs.

In some embodiments, the busbar frame cover 12 may include a busbar assembly accommodating groove 121 configured to accommodate a busbar assembly exposed part 13a that is exposed on the busbar frame 14.

Specifically, in a non-limiting embodiment, the busbar assembly 13 may include the lead parts 132, which are overlapped in pairs and are in contact with the busbar 131, and a fixing member attached onto the lead parts 132.

In a non-limiting embodiment, the busbar assembly exposed part 13a may include the fixing member exposed on the busbar frame 14 and a part of the overlapped lead parts 132.

In some embodiments, the busbar frame cover 12 may not be penetrated.

Because the busbar frame cover 12 is not penetrated, it is possible to prevent the ejecta from escaping out of the battery module 1.

In some embodiments, a shape of the busbar assembly accommodating groove 121 may correspond to an outline shape of the busbar assembly exposed part 13a.

Because the shape of the busbar assembly accommodating groove 121 corresponds to the outline shape of the busbar assembly exposed part 13a, the ejection gap 1421 may be blocked, thereby preventing the ejecta from escaping out of the battery module 1.

A material of the busbar frame cover 12 may be silicone or a silicone compound having improved adhesion.

Because the material of the busbar frame cover 12 is silicone or a silicone compound having improved adhesion, the busbar frame cover 12 can be brought into close contact with the busbar frame 14 and the busbar assembly exposed part 13a by an external force.

In some embodiments, the busbar frame 14 may include a protruding partition part 141 that partitions the busbar assembly 13, and the busbar frame cover 12 may include, at a position corresponding to the partition part 141, a recessed part 122 configured to be fit-coupled to the partition part 141.

Specifically, in a non-limiting embodiment, the protruding partition part 141 of the busbar frame 14 may become wider toward its distal end, and the portion of the recessed part 122 having a shape corresponding to the distal end of the protruding partition part 141 of the busbar frame 14 may also be widened at a position corresponding to the distal end, so that the busbar frame 14 and the busbar frame cover 12 can be strongly fit-coupled together.

In some embodiments, the busbar frame cover 12 may have a convex shape 121a protruding toward the ejection gap 1421 at a position corresponding to the ejection gap 1421.

Because the convex shape 121a protruding toward the ejection gap 1421 is provided at the position on the busbar frame cover 12 corresponding to the ejection gap 1421, all or part of the convex shape portion is inserted into the ejection gap 1421 and serves as a barrier against ejecta being ejected through the ejection gap 1421, thereby efficiently preventing the ejecta from escaping out of the battery module 1.

In some embodiments, the busbar frame 14 may include lead part through-slots 142 through which the lead parts 132 pass through the busbar frame 14, and the busbar frame cover 12 may have the convex shape 121a protruding toward the upper-and-lower ejection gaps 1421, which are regions of the lead part through-slots 142 other than the regions where the lead parts 132 pass therethrough, at positions corresponding to the upper-and-lower ejection gaps 1421.

Since only the lead part through-slots 142 in the busbar frame 14 can be penetrated, the convex shape 121a may be provided at the positions corresponding to the upper-and-lower ejection gaps 1421 (which are the regions of the lead part through-slots 142 other than the regions where the lead parts 132 pass therethrough) so as to protrude toward the upper-and-lower ejection gaps 1421, such that all or part of the convex shape portion is inserted into the upper-and-lower ejection gaps 1421 and serves as a barrier against the ejecta being ejected through the ejection gaps 1421, thereby efficiently preventing the ejecta from escaping out of the battery module 1.

### (Second Embodiment)

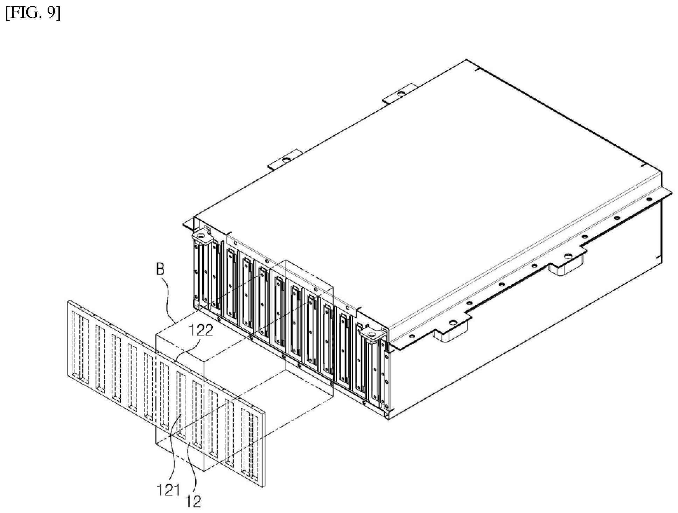

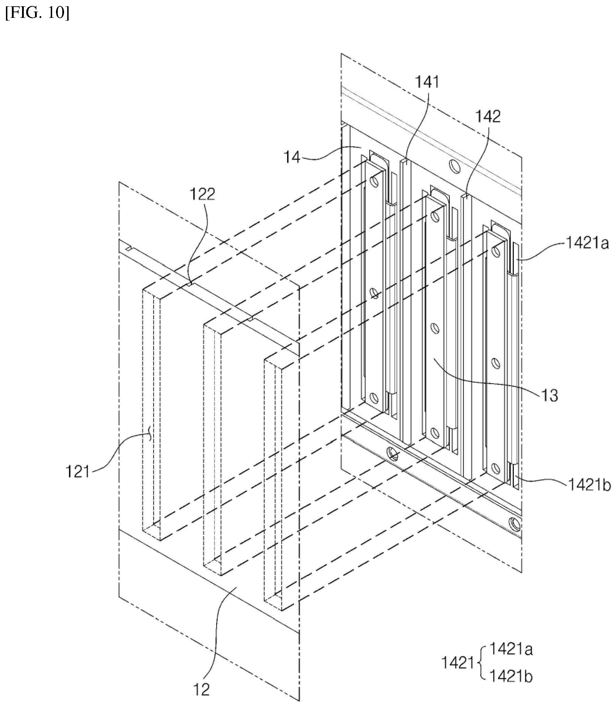

FIG. 9 is a view illustrating a state in which a busbar frame cover 12 is separated in an exploded view of a battery module 1 according to another embodiment of the present disclosure, and FIG. 10 is a view illustrating an enlarged view of the state in which the busbar frame cover 12 is separated in the exploded view of the battery module 1 according to another embodiment of the present disclosure.

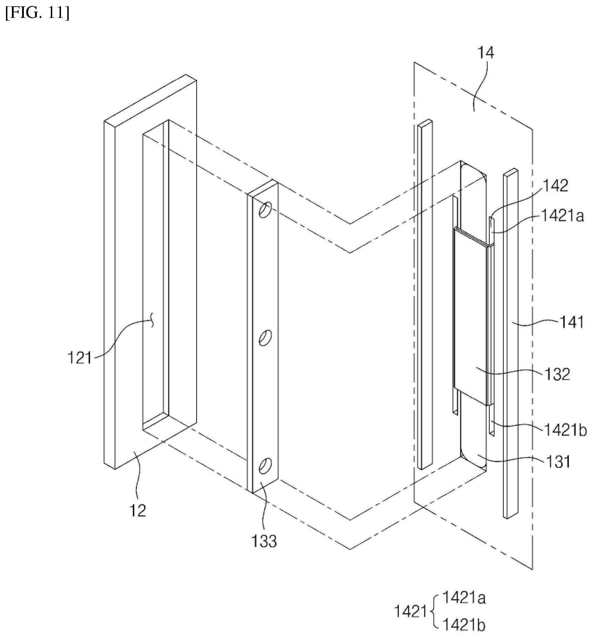

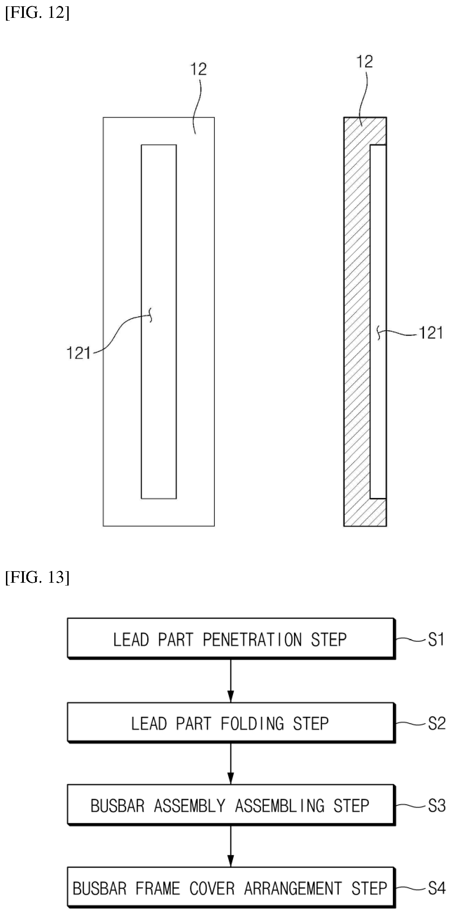

FIG. 11 is a view illustrating a relationship in which a busbar assembly exposed part 13a is accommodated in the busbar frame cover 12, among the busbar frame cover 12, according to another embodiment of the present disclosure, and FIG. 12 is a view illustrating a front view and a side sectional view of the busbar frame cover 12 according to another embodiment of the present disclosure.

Referring to FIGS. 9 to 12, in some embodiments, in the busbar assembly 13, the busbar 131 may be seated in a busbar seating groove provided in the busbar frame 14, the lead parts 132 passing through the busbar frame 14 may be overlapped with each other in pairs, the overlapped lead parts 132 may be in contact with a front surface of the seated busbar 131, and a fixing member 133 may be attached to a front surface of the overlapped lead parts 132 in contact with the front surface of the busbar 131, thereby bringing the busbar 131 and the overlapped lead parts 132 into contact with each other and fixing them.

The busbar seating groove is not penetrated, and the lead parts 132 can pass through the busbar frame 14 via the lead part through-slots 142 included in the busbar frame 14.

In some embodiments, the busbar frame cover 12 may include a busbar assembly accommodating groove 121 having an outline shape corresponding to that of the fixing member 133.

The material of the busbar frame cover 12 may be silicone or a silicone compound having improved adhesion.

Because of the material that adheres closely to the busbar frame 14 and the fixing member 133 under an external force, the busbar frame cover 12 applies a strong pressure such that the fixing member 133 is accommodated in the busbar assembly accommodating groove 121 having an outline shape corresponding to that of the fixing member 133, and thus the busbar frame cover 12 can be brought into close contact not only with the fixing member 133 but also with the portions of the overlapped lead parts 132 exposed on the busbar frame 14.

### (Third Embodiment)

FIG. 13 is a view illustrating a method of manufacturing a battery module according to another embodiment of the present disclosure.

Referring to FIG. 13, a method of manufacturing a battery module according to an embodiment of the present disclosure may include a lead part penetration step S1, a lead part folding step S2, a busbar assembly assembling step S3, and a busbar frame cover arrangement step S4.

In the lead part penetration step S1, lead parts 132 of a cell stack assembly 10 including a plurality of pouch-type cells 10a may be passed through lead part through-slots 142 provided in a busbar frame 14.

In the lead part folding step S2, after a busbar 131 is seated in a busbar seating groove provided in the busbar frame 14, the lead parts 132 that have passed through the busbar frame 14 may be folded in pairs and overlapped with each other so as to be brought into contact with a front surface of the seated busbar 131.

In the busbar assembly assembling step S3, a fixing member 133 may be attached to a front surface of the overlapped lead parts 132, thereby bringing the busbar 131 and the overlapped lead parts 132 into contact with each other and fixing them, so as to assemble a busbar assembly 13.

In the busbar frame cover arrangement step S4, a busbar frame cover 12 may be closely contacted and disposed on the busbar frame 14 so as to block ejecta from being ejected through an ejection gap 1421 present between the busbar assembly 13 and the busbar frame 14.

Although the embodiments of the present disclosure have been described in detail as above, it will be understood by those of ordinary skill in the art to which the present disclosure pertains that various modifications may be made to the present disclosure without departing from the spirit and scope of the present disclosure as defined in the appended claims. Accordingly, any modifications to future embodiments of the present disclosure shall not depart from the technical scope of the present disclosure.

## Claims

1. A battery module comprising:
a cell stack assembly comprising a plurality of stacked pouch-type cells;
a module housing accommodating the cell stack assembly; and
a busbar frame fixing a busbar assembly in which a busbar is assembled with lead parts provided on the cell stack assembly, wherein
the battery module further comprises a busbar frame cover disposed on the busbar frame and configured to block ejecta from being ejected through an ejection gap present between the busbar assembly and the busbar frame.

2. The battery module of claim 1, wherein
the busbar frame cover is provided with a busbar assembly accommodating groove configured to accommodate a busbar assembly exposed part that is exposed on the busbar frame.

3. The battery module of claim 2, wherein
the busbar frame cover is not penetrated.

4. The battery module of claim 2, wherein
a shape of the busbar assembly accommodating groove corresponds to an outline shape of the busbar assembly exposed part.

5. The battery module of claim 2, wherein
a material of the busbar frame cover is silicone or a silicone compound having improved adhesion.

6. The battery module of claim 1, wherein
the busbar frame comprises a protruding partition part configured to partition the busbar assembly, and
the busbar frame cover comprises, at a position corresponding to the partition part, a recessed part configured to be fit-coupled to the partition part.

7. The battery module of claim 1, wherein
the busbar frame cover has a convex shape protruding toward the ejection gap at a position corresponding to the ejection gap.

8. The battery module of claim 1, wherein
the busbar frame comprises lead part through-slots through which the lead parts pass through the busbar frame, and
the busbar frame cover has a convex shape protruding toward upper-and-lower ejection gaps, which are regions of the lead part through-slots other than regions where the lead parts pass therethrough, at positions corresponding to the upper-and-lower ejection gaps.

9. The battery module of claim 1, wherein
in the busbar assembly,
the busbar is seated in a busbar seating groove provided in the busbar frame,
the lead parts passing through the busbar frame are overlapped with each other in pairs,
the overlapped lead parts are in contact with a front surface of the seated busbar, and
a fixing member is attached to a front surface of the overlapped lead parts in contact with the front surface of the busbar, thereby bringing the busbar and the overlapped lead parts into contact with each other and fixing them.

10. The battery module of claim 9, wherein
the busbar frame cover comprises a busbar assembly accommodating groove having an outline shape corresponding to that of the fixing member.

11. The battery module of claim 9, wherein
a material of the busbar frame cover is silicone or a silicone compound having improved adhesion.

12. A method of manufacturing a battery module comprising:
a lead part penetration step of passing lead parts of a cell stack assembly including a plurality of pouch-type cells through lead part through-slots provided in a busbar frame;
a lead part folding step of, after a busbar is seated in a busbar seating groove provided in the busbar frame, folding the lead parts that have passed through the busbar frame in pairs and overlapping them so as to be brought into contact with a front surface of the seated busbar;
a busbar assembly assembling step of attaching a fixing member to a front surface of the overlapped lead parts so as to bring the busbar and the overlapped lead parts into contact with each other and fix them, thereby assembling a busbar assembly; and
a busbar frame cover arrangement step of closely contacting and disposing a busbar frame cover on the busbar frame so as to block ejecta from being ejected through an ejection gap present between the busbar assembly and the busbar frame.
